# EUROPÄISCHE PATENTSCHRIFT

(11) **EP 1 888 285 B1**
(45) Veröffentlichungstag und Bekanntmachung des Hinweises auf die Patenterteilung: **02.12.2009**
(21) Anmeldenummer: 06761966.8
(22) Anmeldetag: 02.06.2006
(51) Int. Cl.: B23F 21/02, B24D 5/06, B24D 7/06

(54) **SCHLEIFWERKZEUG**
GRINDING TOOL
OUTIL DE RECTIFICATION

(30) Priorität: 09.06.2005 DE 202005009095 U; 01.08.2005 DE 102005036597; 22.03.2006 DE 102006013596
(43) Veröffentlichungstag der Anmeldung: 20.02.2008
(73) Patentinhaber: Lapport DCS GmbH, 67677 Enkenbach-Alsenborn (DE)
(72) Erfinder: SCHWAB, Karl-Heinz, 67677 Enkenbach-Alsenborn (DE)
(74) Vertreter: Schmitt, Meinrad
(86) Internationale Anmeldenummer: PCT/EP2006/005310
(87) Internationale Veröffentlichungsnummer: WO 2006/131280

(56) Entgegenhaltungen:
- US-A- 3 324 603
- US-A- 4 209 950

## Beschreibung

Die Erfindung bezieht sich auf ein Schleifwerkzeug.

Aus der US 3 324 603 A ist ein als Schleifschnecke ausgebildetes Schleifwerkzeug mit einem Tragkörper bekannt, welcher im Umfangsbereich radial vorstehende Rippen und zwischen diesen Nuten aufweist. Auf den zylindrischen Außenflächen der Rippen sind die Lamellen des Schleitbelags befestigt, welche somit aus dem Tragkörper hervorstehen, aber nicht aus dessen Nuten. Die Schleiffläche der Lamellen wird durch deren auf einem Zylindermantel liegenden Außenfläche gebildet und für ein Flankenschleifverfahren für Zahnräder ist das Schleifwerkzeug nicht ohne weiteres geeignet. Ferner besteht die Gefahr eines Abreißens der Lamellen von den Rippen.

Ferner ist aus der US 4 209 950 A eine Schleifmaschine mit einem Schleifwerkzeug bekannt, welches auf der Außenfläche eine Anzahl von Schieifsegmenten aufweist. Diesen wird durch radial innen liegende Ringräume und einen Wasserkanal in eine Druckkammer Schmiermittel zugeführt, welches unter Druck an die als Schleifflächen dienenden axialen Stirnflächen der Schleifsegmente gefördert wird. Die Schleifsegmente sind mittels Schrauben und dreieckförmigen Klemmstücken am Außenumfang des ringförmigen Tragkörpers befestigt

Weiterhin sind, beispielsweise aus den Druckschriften EP 1 225 007A1, US 6 358 1333 B1, US 5611724A oder JP 65 070 548 A rotationssymmetrischen Schleifwerkzeuge bekannt, welche als Schleifscheiben ausgebildet sind. Diese enthalten einen Tragkörper aus einem geeigneten Werkstoff, wie Stahl, Aluminium, Keramik oder dergleichen, sowie einen im Umfangsbereich angeordneten umlaufenden Schleifbelag mit vorgegebener Dicke, welcher als geschlossener Ring ausgebildet ist oder aus einzelnen Lamellen oder Kreissegmenten besteht. Der Schleifbelag ist nach unterschiedlichen Technologien, wie Kleben, Löten. Aufpressen oder dergleichen, mit dem Tragkörper verbunden. Der Schleifbelag ist insbesondere als ein Diamant- oder CBN-Belag ausgebildet und/oder enthält Schleifkörner bzw. abrasive Partikel mit keramischer, metallischer oder sonstiger Bindung. Da der Schleifbelag recht hart und zum Teil sehr dicht ist, insbesondere um hohe Standzeiten zu erreichten, entstehen oftmals folgende Problems und daraus resultierende Nachteile:
- Brandflecken auf der Werkstückobernäche und Gefügeveränderungen,
- Neuhärtezonen,
- hohe Schleifdrücke bzw. starke Belastung der Schleifspindel,
- Verzug des zu bearbeitenden Werkstückes,
- durch Klebefugen bedingte Rattermarken oder Vibration,
- keine oder zu geringe Kühlung an der Kontaktfläche der Schleifscheibe mit dem Werkstück.

Ferner sind Schleifwerkzeuge für das Flankenschleifverfahren bekannt, um Zahnräder, insbesondere nach einem Abwälzverfahren, zu schleifen. Derartige Schleifwerkzeuge werden als Schleifschnecken bezeichnet und besitzen ein an die jeweilige Geometrie der Zahnräder, wie Modul, Flankenwinkel, Kern- und Zahnspitzendurchmesser und dergleichen angepasstes Oberflächen- bzw. Außenprofil. Für derartige Schleifschnecken besteht die Forderung nach einer einfachen Abrichtbarkeit, d. h. einer Korrektur, insbesondere mittels einer Diamantabrichtrolle, um durch Überschleifen einen eventuellen Verschleiß am Profil der Schleifscheibe zu korrigieren. Die Herstellung von Schleifschnecken kann dahingehend erfolgen, dass ausgehend von einer geraden Schleifscheibe in den Umfangsbereich das erforderliche Außenprofil geschliffen oder gedreht wird. Dies bedeutet einen erheblichen Materialverlust, einen sehr hohen Werkzeugverschleiß und ist insgesamt nicht wirtschaftlich produzierbar.

Es gibt metallgebundene Schleifschnecken mit Diamant oder CBN. Bedingt durch die Herstellung mit der Metallbindung fehlt ein Porenraum zwischen den Schleifkörnern (er ist mit der Metallbindung gefüllt). Deshalb müssen diese Scheiben vor dem Schleifeinsatz mit weichen keramisch oder Kunstharz gebundenen Konditionierscheiben eingeschliffen werden. Dabei wird die Metallbindung zwischen den Schleifkörnern "zurückgesetzt", möglichst ohne die CBN- oder Diamantkörner zu verletzen, um den notwendigen Platz für Kühlmittel und Spanraum zu erhalten. Die schwierige Reproduzierbarkeit der Einsatzbedingungen der Schleifscheibe erschwert die Prozesssicherheit der Schleifergebnisse. Deshalb wird die Metallbindung nicht so oft eingesetzt.

Ferner besitzen galvanisch gebundene Schleifschnecken genau eine Schicht von CBN- oder Diamantkörnern. Zwischen den Schleifkörnern, die nur mit einer sehr dünnen galvanischen Schicht überzogen und damit an den Grundkörper gebunden sind, wird der Freiraum für den Kühlmitteltransport und Spänetransport genutzt. Der Nachteil dieser Schleifschnecken ist, dass Profilkorrekturen nicht möglich sind. Sie sind auch lediglich so lange einsetzbar, bis diese einzige Schicht der Schleifkörner abgestumpft und damit verbraucht ist.

Dokument WO2005-011917, welches als nächstkommender Stand der Technik für Anspruch 1 angesehen wird, offenbart (siehe dort insbesondere Seite 3 Zeile 9-18) ein Schleifwerkzeug, enthaltend einen Tragkörper und einen im Umfangsbereich angeordneten Schleifbelag mit Lamellen , zwischen welchen Spalte vorhanden sind, wobei es möglich ist, zum Schleifen Kühlmittel zuzuführen und wobei der Tragkörper Nuten und Lamellen aufweist, die um einen vorgegebenen Betrag aus dem Tragkörper hervorstehen, wobei die Lamellen ein Außenprofil mit Zähnen aufweisen, weiters die Lamellen teilweise in die Nuten eingesetzt sind, welche in der Außenfläche des Tragkörpers angeordnet sind oder zwischen in Ausnehmungen des Tragkörpers teilweise eingesetzten Fixierungsstegen vorgesehen sind, wobei die Lamellen aus den Nuten und über die genannte Außenfläche des Tragkörpers oder über die freien Oberflächen der Fixierungsstege teilweise vorstehen, weiters der Tragkörper oder die Fixierungsstege Zähne aufweisen, welche mit den Zähnen der Lamellen korrespondieren und diese abstützen, wobei die Zähne der Lamellen radial über die Zähne des Tragkörpers oder der Fixierungsstege in einem vorgegebenen Abstand hinausragen, und die Lamellen eine poröse Struktur derart aufweisen, dass das Kühlmittel durch die Lamellen strömen kann.

Hiervon ausgehend liegt der Erfindung die Aufgabe zugrunde, die aufgezeigten Probleme und Nachteile zu vermeiden und mit einem geringen Aufwand eine verbesserte Schleifscheibe zu schaffen und als Schleifschnecke auszubilden. Die als Schleifschnecke ausgebildete Schleifscheibe soll in einfacher Weise herstellbar sein und eine sichere Befestigung und Fixierung der Lamellen bezüglich des Tragkörpers gewährleisten. Des Weiteren soll eine optimierte Zufuhr von Kühlmittel in die Schleifkontaktzone bzw. die schleifaktive Zone erreicht werden, und eine Verschmutzung des Schleifbelags und mit zunehmender Schleifdauer sich verschlechternde Schleifeigenschaften sollen vermieden bzw. reduziert werden. Des Weiteren soll die Schleifschnecke eine verbesserte Standzeit aufweisen, und die Intervalle für eine etwaige Nachbearbeitung des Schleifbelags, wie Abrichten und/oder Konditionieren und/oder Nachschärfen und/oder Profilieren sollen verlängert werden.

Die Lösung dieser Aufgabe erfolgt gemäß den im Patentanspruch 1 angegebenen Merkmalen.

Das erfindungsgemäße als Schleifschnecke ausgebildete Schleifwerkzeug zeichnet sich durch eine verbesserte und funktionssichere Konstruktion aus und ist in einfacher Weise herstellbar. Die Lamellen oder Schleifplättchen des Schleifbelags sind exakt in Nuten des Tragkörpers eingepasst und bevorzugt auch verklebt oder gelötet, wobei die Lamellen um einen vorgegebenen Betrag aus den Nuten und/über die Außenfläche des Tragkörpers vorstehen. Zwischen den teilweise in die Nuten eingesetzten Lamellen und dem Tragkörper besteht erfindungsgemäß eine kraftschlüssige Verbindung. Ein spielfreier Sitz und/oder eine spielfreie Passung zwischen dem in die jeweilige Nut eingreifenden Teil der Lamelle und den anliegenden Nutwänden sind in bevorzugter Weise durch eine definierte Vorspannung vorgegeben. Die Lamellen sind mittels einer Klemm- oder Pressverbindung teilweise in den genannten Nuten eingepasst und fixiert, so dass auch bei einer etwaigen Beschädigung einer gegebenenfalls in bevorzugter Weise vorhandenen Klebeverbindung oder Lötverbindung, insbesondere aufgrund einer hohen thermischen Belastung, gleichwohl eine dauerhafte Befestigung und Fixierung der Lamellen sicher gestellt ist. Die Nuttiefe ist in vorteilhafter Weise in Abhängigkeit der Lamellenstärke vorgegeben, und zwar bevorzugt im Bereich von 0,3 bis 6 mm, vorteilhaft von 0,4 bis 5 mm und insbesondere von 0,5 bis 4 mm. Entsprechend dem Abstand der Nuten wird problemlos die Breite des Spaltes für die Förderung des Kühlmittels und den Abtransport von Schleifspänen vorgegeben und an die jeweiligen Einsatzbedingungen angepasst. Durch die erfindungsgemäße Befestigung wird eine für eine lange Gebrauchsdauer und/oder ständig eine hinreichend gute Verbindung zwischen dem regelmäßig aus Metall bestehenden Tragkörper und den Lamellen sicher gestellt, und zwar trotz unterschiedlicher Wärmeausdehnungskoeffizienten der Materialien des Tragkörpers einerseits und der Lamellen andererseits und ständiger Temperaturwechsel während des Schleifens. Von besonderer Bedeutung ist die poröse Struktur der einzelnen Lamellen, insbesondere durch den Verbund der Schleifkörner mit keramischer Bindung, und die besondere Anordnung und Befestigung der Lamellen auf dem Tragkörper. Durch die Schrägstellung der Lamellen wird ein gleitender Übergang der Schleifkraft von Lamelle zu Lamelle erreicht, wobei trotz der Spalte zwischen den Lamellen Vibrationen oder schlagende Kräfte vermieden werden, welche sich zerstören auf die schlagempfindliche insbesondere keramische Bindung auswirken würden.

Die erfindungsgemäße Schleifschnecke enthält einen bevorzugt metallischen Trag- oder Grundkörper, der bereits eine Grundform und das Gewinde der erfindungsgemäßen Schleifschnecke aufweist. Der insbesondere keramisch gebundene Schleifbelag ist in einzelnen kleinen Lamellen exakt auf den Trag- oder Grundkörper angeordnet. Die einzelnen Lamellen und/oder Keramikteile werden linienförmig in Winkeln von 0 bis 90°, vorzugsweise unter einem vorgegebenen Winkel schräg zur Drehachse, insbesondere 3 Grad bis 80 Grad, auf dem Grundkörper angeordnet, insbesondere geklebt. Zwischen den einzelnen Linien bzw. Lamellen sind Spalten oder Lücken in vorgegebener Größe vorhanden, insbesondere im Bereich von 0,2 bis 10 mm und/oder je nach Größe der Module. Die Lamellen enthalten bevorzugt keramisch gebundenes Schleifkorn, insbesondere aus Diamant oder CBN, und haben eine vorgegebene Schleifbreite, insbesondere von 3 bis 15 mm. Die Lamellen sind teilweise in Nuten des Grundkörpers eingesetzt und ragen mit vorgegebenem Abstand radial über die Außenfläche des Grundkörpers hinaus. Die Nuten sind entweder direkt in der Außenfläche angeordnet oder mittelbar in Nuten zwischen Fixierungsstegen oder Abstandshaltern welche ihrerseits vorteilhaft in an der Außenfläche des Grundkörpers angeordneten Ausnehmungen festgelegt sind. Die Lamellen sind entweder einteilig durchgehend in den Nuten angeordnet oder unterteilt in bevorzugt unmittelbar nebeneinander angeordnete Lamellenstucke. Der Trag- oder Grundkörper weist in vorteilhafter Weise ein Gewinde mit Zähnen, im Wesentlichen entsprechend der Außenkontur der Schleifschnecke bzw. der genannten Lamellen derart auf, dass die Zähne des Tragkörpers die radial nach außen vorstehenden Zähne der Schleifschnecke abstützen. Bei der Ausführungsform der mittelbaren Befestigung mittels der genannten Fixierungsstege oder Abstandshalter weisen diese analog radial außen die Gewindekontur mit den Zähnen zur Abstützung der Zähne der Lamellen auf. Die Zähne der Lamellen ragen in einem vorgegebenen Abstand radial über die Zähne des Tragkörpers und/oder der Abstandshalter hinaus, so dass bei Bedarf problemlos die Lamellen bzw. deren Zähne bzw. das Gewinde der Schleifschnecke nachbearbeitet bzw. nachgeschliffen werden können, um die erforderliche Außengeometrie und/oder Gewindekontur und/oder das Gewindeprofil wieder herstellen zu können. Das Abrichten oder Konditionieren oder Nachschärfen oder Profilieren der Schleifscheibe und/oder Schleifschnecke kann somit problemlos durchgeführt werden.

Besondere Merkmale des als Schleifschnecke ausgebildeten Schleifwerkzeuges sind:
Die wertvollen Schleiflamellen haben ein Profil, das dem Modul und dem Steigungswinkel im Wesentlichen entspricht, so dass sie in den Grundkörper passen. Gleichzeitig wird durch die Form des Grundkörpers die Positionierung der Einzellamelle vorgegeben.

Die Lamelle ist so geformt, dass das gewünschte Profil der Schleifschnecke direkt nach der Befestigung, insbesondere Klebung des Schleifbelages als "Rohprofil" existiert und nur noch im 1/10 mm Bereich nachprofiliert werden muss.

Ein großer Vorteil dieser Schleifwerkzeuge aus CBN oder Diamant ist: Das Profilieren kann so erfolgen, wie es von den bisher eingesetzten keramischen Korund oder Siliciumcarbidscheiben bekannt ist. Es können die gleichen Maschinen, Abrichtprogramme eingesetzt werden. Eventuell ist aus wirtschaftlichen Überlegungen die Diamantabrichtrolle zu modifizieren.

Die Vorteile der keramischen Bindung mit ihrer natürlichen Porosität, damit sind Spanraum und Kühlmitteltransport mit der Haltbarkeit der hochharten Schleifkörner Diamant oder CBN verbunden.

Zusätzlich wird durch die Freiräume und/oder Spalte zwischen den einzelnen Lamellenlinien vermehrt Kühlmittel in die schleifaktive Zone transportiert. Gleichzeitig kann das Kühlmittel von der Seite unten in die Lamellen eindringen und bedingt durch die Drehbewegung wird es an der Oberfläche wieder ausgeschleudert. Damit entsteht ein Spüleffekt, der eventuell anhaftende Schleifspäne aus dem Porenraum der Lamelle auswäscht.

Die Gefahr des Schleifbrandes (Blaufärbung) auf dem Werkstück ist erheblich reduziert.

Die zwischen den Lamellen vorhandenen Spalte der Schleifscheibe werden mit Kühlmittel gefüllt, welches in bekannter Weise von der mit der Schleifmaschine ausgerüsteten Schleifscheibe zugeführt wird, wobei kein Umbau oder keine Konstruktionsänderung an der Schleifmaschine erforderlich sind. Aufgrund der erfindungsgemäßen porösen Struktur der Lamellen wird das Kühlmittel durch die genannten Spalte vermehrt über und in die Schleifzone geführt, wobei das Kühlmittel die Lamellen durchfluten und spülen kann. Somit wird in bevorzugter Weise ermöglicht, dass das Kühlmittel die Lamellen wieder auf kurzem Wege verlassen kann, wobei in besonders vorteilhafter Weise eine Durchspülung und Säuberung erfolgt. Eine Ansammlung von Abrieb bzw. ein Schmutzbelag auf bzw. in der Schleifscheibe bzw. deren Lamellen wird in besonders vorteilhafter Weise ebenso vermieden wie nachteilig veränderte bzw. verschlechterte Schleifeigenschaften. Durch die erfindungsgemäße Anordnung und Ausbildung und insbesondere der Porosität der Lamellen wird in besonders zweckmäßiger Weise das Entstehen einer Schmutz- oder Schlammschicht praktisch vermieden, zumindest aber für eine im Vergleich mit bekannnten Schleifscheiben erheblich verlängerte Zeit verzögert, und für eine lange Zeit und/oder erheblich verlängerte Standzeit ist der Schleifprozess ohne nachteilige Beeinflussung durch Abrieb oder Schmutzbelag durchführbar.

Die erfindungsgemäße Schleifscheibe und/oder Schleifschnecke, nachfolgend auch Lamellenschleifscheibe genannt, weist vor allem folgende Vorteile auf:
- Geringere Schleifdrücke bzw. geringere Kontaktfläche,
- verbesserte Kühlung, wobei die Kühlflüssigkeit durch die jeweiligen Luftspalte zwischen den Lamellen und die Lamellen selbst bis zur Kontakzone gepresst wird,
- Vermeidung von Klebefugen am Umfang der Schleifscheibe und/oder Schleifschnecke,
- weniger Brandflecken und Neuhärtezonen,
- geringerer Verzug des Werkstücks,
- verbesserte Späneabfuhr.

Die erfindungsgemäße Schleifschnecke wirkt makrogeometrisch wie ein Fräswerkzeug. Die einzelnen Lamellen greifen nahtlos, eine nach dem anderen, in den Berarbeitungsprozess, in die Kontaktzone ein. Hierbei wird der Luftspalt zwischen den Lamellen als Transportraum für das Kühlmittel und die Spanabfuhr genutzt, wobei in bevorzugter Weise in Kombination mit der Porosität der Lamellen deren Verschmutzung in Folge von Abrieb und/oder Schleifspänen vermieden wird. Das Kühlmittel wird durch die Drehbewegung der Schleifscheibe und die Schrägstellung der Lamellen in tangentialer Richtung darüber hinaus beschleunigt und verstärkt in die Kontaktzone und/oder durch die poröse Struktur der Lamellen gedrückt. Mikrogeometrisch wirkt die Oberfläche der jeweiligen Lamelle als ein Schleifkörper mit den bekannten Bearbeitungseigenschaften von keramischen, metallgebundenen oder sonstigen bekannten Schleifkörpern. Die Korngröße der Schleifkörner, die Struktur und die Art der Bindung derselben wird in Abhängigkeit der jeweiligen Schleifaufgabe vorgegeben, wodurch eine hohe Variationsbreite erreicht wird. Im Hinblick auf die makrogeometrische Wirkung wie ein Fräser einerseits und die mikrogeometrische Wirkung der Oberfläche der einzelnen Lamellen andererseits wird in Kombination ein "Schleiffräsen" ermöglicht. Die erfindungsgemäße Schleifscheibe ist somit ein Werkzeug zum Schleiffräsen.

Die erfindungsgemäße Lamellenschleifscheibe und/oder Schleifschnecke enthält einzelne Plättchen, welche insbesondere in einem Winkel von 3° bis 80° zur Drehachse am Umfang des Tragkörpers angeordnet sind. Der Luftspalt zwischen den Lamellen oder Plättchen ist im Bereich zwischen 1/10 mm bis mehreren mm je nach Einsatz vorgegeben. Die Herstellung der Lamellenschleifscheibe kann auf zwei Arten erfolgen:
a) Die einzelnen vorgefertigten Plättchen werden in die am Umfang des Körpers eingebrachten Nuten eingefügt, insbesondere eingepresst, und ferner eingeklebt oder gelötet, je nach Bindung des Plättchens.
b) Alternativ werden in den geschlossenen Schleifbelag der Schleifscheibe, insbesondere mittels einer Diamanttrennscheibe, Nuten und somit die Luftspalte eingeschliffen.

Die Lamellen bestehen aus Schleifkörperplättchen, wobei die Bindung keramischen, organischen oder metallischen Charakter aufweisen kann. Diese Lamellen bzw. Plättchen sind 0,5 bis 10,3 mm dick und stehen insbesondere 1 bis 10 mm aus dem Tragkörper hervor. Die Lamellen sind so angeordnet, dass die Anpresskräfte zum Schleifen zwischen Lamellenschleifscheibe und Werkstück ohne Unterbrechung von Lamelle zu Lamelle fließend übergehen. Die Lamellen stehen bevorzugt im Winkel von 3° bis 80° schräg zur Drehrichtung. Das Schleifwerkzeug bzw. die Schleifscheibe zeichnet sich dadurch aus, das in der Schleifkontaktzone immer mindestens zwei Lamellen, zweckmäßig mehrere, gleichzeitig Kontakt mit dem Werkstück haben. Damit wird ein nahtloser Übergang von Lamelle zu Lamelle erreicht. Die-Schleifkräfte werden kontinuierlich von den Lamellen des Werkzeugs auf das Werkstück übertragen, und ein Rattern und Vibrieren wird so vermieden. Das ist ein entscheidender Unterschied zu segmentieren Scheibenausführungen.

Der Luftspalt von 0,3 bis 5 mm zwischen den Lamellen wird zum Transport des Kühlmittels (Wasser, Emulsion, Öl oder Luft) genutzt. Dabei wird das Kühlmittel bevorzugt direkt von der "Schneidkante" des Lamellenplättchens vorbeigeführt, und somit werden die durch den schabenden oder schälenden Eingriff entstehenden Werkstückspäne (Partikel) abgeführt. Gleichzeitig wird durch die große Menge Kühlmittel das Werkstück intensiv gekühlt. Zusätzlich sind infolge der bevorzugt offenen porösen Struktur, gemäß welcher zumindest ein erheblicher Teil der offenen Poren miteinander in Verbindung steht, innerhalb den Lamellen diese durchdringende Kanäle mit vorgegebenen Weiten oder Durchmessern, bevorzugt im Bereich von 2 Mikrometern bis 3 Millimetern, insbesondere von 5 Mikrometern bis 2 Millimetern, vorhanden, und zwar insbesondere bei den keramisch gebundenen Lamellen die Porenräume, Kühlmittel- und Spantransporräume. Im Gegensatz zu linearen Bohrungen oder Nuten weisen die erfindungsgemäßen Kanäle und/oder offenen Porenstrukturen irreguläre Formen auf und ermöglichen gleichwohl den Durchtritt und das Durchspülen der Lamellen mittels des Kühlmittels. Weiterhin sei besonders darauf hingewiesen, dass im Falle des Zusetzens oder aus sonstigen Gründen reduzierter Durchströmbarkeit eines Teiles eines solchen Kanals aufgrund der offenen Porenstruktur das Kühlmittel in benachbarte bzw. angrenzende Poren ausweichen kann und nach Art eines Bypasses eine vorhandene Störungszone umströmt und infolge dessen die erfindungsgemäße Durchspülung der Lamelle gewährleistet ist. Des Weiteren sei darauf hingewiesen, dass im Fall der Bindung der Schleifkörner mit einem Bindemittel in diesem selbst und/oder in den Grenzzonen zwischen den Schleifkörnern und dem Bindemittel offene und miteinander in Verbindung stehende Poren vorhanden sind und die genannten Kanäle bilden. Ferner können vor allem bei metall- oder organisch gebundenen Lamellen Spanräume, wie bei den bekannten Werkzeugen, durch Abrichten vorgesehen sein. Die Kanäle bzw. die die Lamellen durchdringenden Porenräume weisen unregelmäßige und/oder zickzackförmige und/oder bogenartige und/oder in Richtung ebenso wie in den Querschnitten variierende Konturen bzw. Strukturen auf.

Ein zusätzlicher Vorteil der vorgeschlagenen Schleifscheibe und/oder Schleifschnecke ist, dass die in Schleifmaschinen übliche Kühlmittelzufuhr nicht geändert werden muss. Das Kühlmittel wird von vorne auf die Schleifscheibe (eventuell auch von der Seite) gespritzt. Während des Schleifkontaktes entsteht durch die Schleifscheibenumfangsgeschwindigkeit wie bei einem Pumpenrad, eine saugende Wirkung. Das Kühlmittel wird durch die Beschleunigung genau in die schleifaktive Zone vor der Lamelle, gegen das Werkstück geführt.

Ein weiterer Vorteil ist, dass die Schleifscheibe und/oder Schleifschnecke mit der heutigen bekannten Technologie (rotierende Diamantabrichtwerkzeuge) abgerichtet, konditioniert, nachgeschärft, profiliert werden kann, so wie es bei den entsprechenden Schleifscheibentypen bekannt ist.

Bei einer Schrägstellung der insbesondere keramisch gebundenen Lamellen über 45° zeigt die Scheibe im Vergleich zu Schleifscheiben mit Segmenten oder Ringe eine deutlich geringere Gratbildung beim unterbrochenen Schliff an Werkzeugen, wie Fräser oder Spiralbohrer.

Zustellungen beim Schleifen von Hartmetall im 1/10 mm Bereich wurden erreicht, während bisher üblicherweise im Mikrometer im günstigsten Falle im 1/100 mm Bereich erreicht wurden. Dies ist ohne Spalt zur Kühlmittelführung und poröse Struktur der Lamellen in Kombination mit scherenden Kräften durch die Schrägstellung der Lamellen nicht erreichbar.

Ferner ist eine Besonderheit der erfindungsgemäßen Lamellenschleifscheibe im Vergleich entsprechend zur geschlitzten "Ringschleifscheibe" dahingehend gegeben, dass durch die unabhängige Verbindung jeder einzelnen Lamelle mit dem Tragkörper Wärmeausdehnungen des Systems erfolgen können, ohne dass es zu Spannungen führt. Der Tragkörper kann am Umfang wachsen, und es kann nicht zu Rissbildungen im Schleifbelag (wie bei Ring- oder Segmentausführung) kommen. Damit reduziert sich die Gefahr des Abplatzens oder der Rattermarken auf dem Werkstück.

Die vorgeschlagene Technologie der Lamellenkörper kann auf allen rotationssymmetrischen Schleifwerkzeugen, insbesondere auf Umfangschleifscheiben, Profilschleifscheiben oder Topfschleifscheiben eingesetzt werden. Die Belagbreite ist von 5 mm bis 4 000 mm (bei Walzenscheiben) sinnvoll wählbar. Im Umfangsbereich des Schneidwerkzeugs liegen die Arbeitsfläche und/oder die dem Werkstück zugewandten Oberflächen der Lamellen, wobei die Arbeitsfläche, z. B. zylindrisch, konisch oder in einer Radialebene liegend ausgebildet sein kann und/oder die genannten Oberflächen beliebige Konturen, wie ebene, konische oder gekrümmte, aufweisen können.

Besondere Ausgestaltungen und Weiterbildungen der Erfindung sind in den Unteransprüchen und der nachfolgenden Beschreibung besonderer Ausführungsbeispiele angegeben.

Die Erfindung wird nachfolgend an Hand der in der Zeichnung dargestellten Ausführungsbeispiele näher erläutert, ohne dass insoweit eine Beschränkung erfolgt. Es zeigen:
- Fig. 1: den Tragkörper teilweise in einer Ansicht und teilweise geschnitten,
- Fig. 2: einen Schnitt durch einen Tragkörper ähnlich Fig. 1 entlang der Schnitt- linie A,
- Fig. 3: schematisch eine Ansicht der Schleifschnecke mit dem Schleifbelag bzw. den Lamellen in Blickrichtung B gemäß Fig. 2,
- Fig. 4: eine schematische Ansicht auf die Schleifschnecke mit Lamellen in Blic- krichtung C gemäß Fig. 2,
- Fig. 5: eine Prinzipdarstellung des Tragkörpers mit den Lamellen, jedoch ohne Gewinde bzw. Zähnen,
- Fig. 6: die Schleifschnecke teilweise in einer Ansicht und teilweise geschnitten,
- Fig. 7: ein weiteres Ausführungsbeispiel der Schleifschnecke teilweise in per- spektivischer Ansicht und geschnitten,
- Fig. 8: eine Lamellenschleifscheibe mit Fixierungsstegen des Tragkörpers zur Befestigung der Lamellen,
- Fig. 9: einen Schnitt durch die Lamellenschleifscheibe bzw. Schleifschnecke entlang Schnittlinie D gemäß Fig. 8,
- Fig. 10: eine Ansicht eines besonderen Ausführungsbeispiels eines Lamellen- stücks.

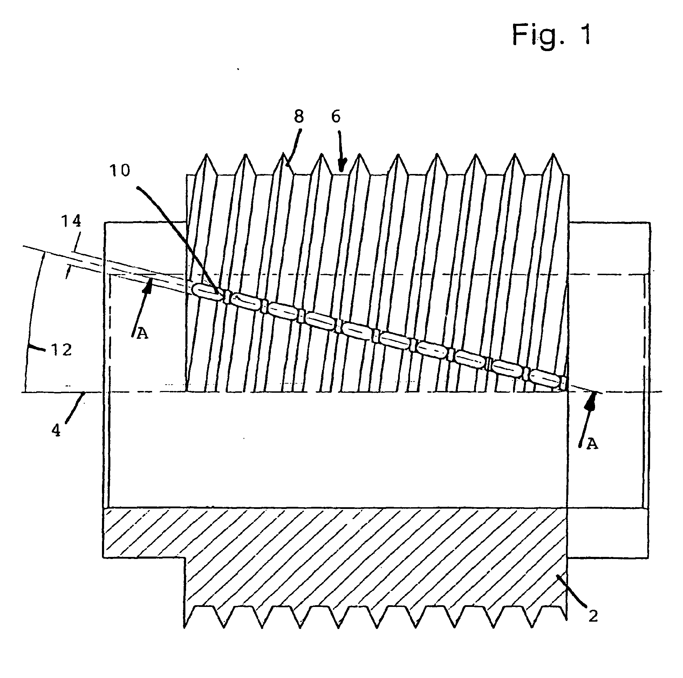

Fig. 1 zeigt den Tragkörper 2, welcher an seiner zur Drehachse 4 koaxialen Umfangs- oder Außenfläche 6 mit einem Gewindeprofil 8 versehen ist. Das Gewindeprofil 8 entspricht zumindest teilweise der mittels der nachfolgend zu erläuternden Lamellen vorgegebenen Gewindekontur der fertigen Schleifschnecke. Der Tragkörper 2 weist in seiner Außenfläche eine vorgegebene Anzahl von Nuten 10 und/oder Einfräslinien auf, in welche die Lamellen eingesetzt und/oder befestigt werden. Aus Gründen der Übersicht ist hier nur eine einzige Nut 10 dargestellt, welche zur Drehachse 4 in einem vorgegebenen Winkel 12 geneigt angeordnet ist. So können über den Umfang gleichmäßig verteilt beispielsweise dreiundsechzig derartige Nuten 10 angeordnet sein, welche eine Breite 14 von beispielsweise 5 mm aufweisen und in der Mitte etwa 2,5 mm tief sind. Wie dargestellt, ist der Winkel 12 mit 15° vorgegeben, doch kann im Rahmen der Erfindung der Winkel 12 im Bereich von 0 bis 90°, vorzugsweise 3 bis 80°, vorgegeben sein.

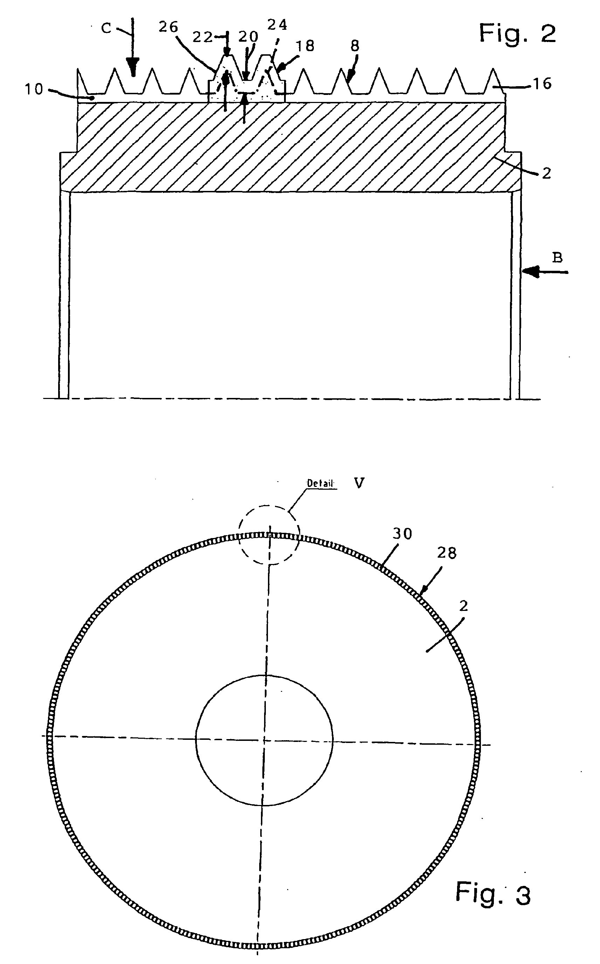

Fig. 2 zeigt teilweise einen Schnitt durch den Tragkörper 2 ähnlich Fig. 1 entlang Schnittlinie A. Der Tragkörper 2 enthält die Nut 10, wobei die einzelnen Zähne 16 des Gewindeprofils 8 hinter der Zeichenebene liegen. In der Nut 10 ist ein Lamellenstück 18 angeordnet, wobei die weiteren Lamellenstücke der in der Nut 10 angeordneten gesamten Lamelle der Einfachheit halber nicht dargestellt sind. Es sei festgehalten, dass die gesamte Lamelle aus einer vorgegebenen Anzahl der unmittelbar nebeneinander in der Nut 10 angeordneten Lamellenstücken besteht. Die Lamelle und/oder deren Lamellenstücke sind teilweise in der Nut 10 angeordnet und ragen in vorgegebenen Abständen 20, 22 aus der Nut 10 radial hinaus. Mit strichpunktierter Linie 24 sind die hinter dem Lamellenstück 18 befindlichen Zähne des Tragkörpers 2 angedeutet. Das Lamellenstück 18, entsprechendes gilt für die weiteren Lamellenstücke und die gesamte Lamelle, besitzen ein Außengewinde mit Zähnen 26, welche das Gesamtprofil der erfindungsgemäßen Schleifschnecke bilden. Mittels des Gewindes bzw. dessen Zähne 16 des Tragkörpers 2 werden somit das Außengewinde der Lamelle bzw. deren Lamellenstücke 18 abgestützt und gesichert. Dies gilt analog für die vor der Zeichenebene liegenden Zähne des Tragkörpers 2.

Fig. 3 zeigt schematisch in einer axialen Ansicht in Blickrichtung B gemäß Fig. 2 die Schleifschnecke mit dem Tragkörper 2, an dessen Umfang ein Schleifbelag 28 angeordnet ist. Dieser Schleifbelag 28 enthält eine erhebliche Anzahl der genannten Lamellen 30, welche insbesondere als keramisch gebundene Lamellen ausgebildet sind.

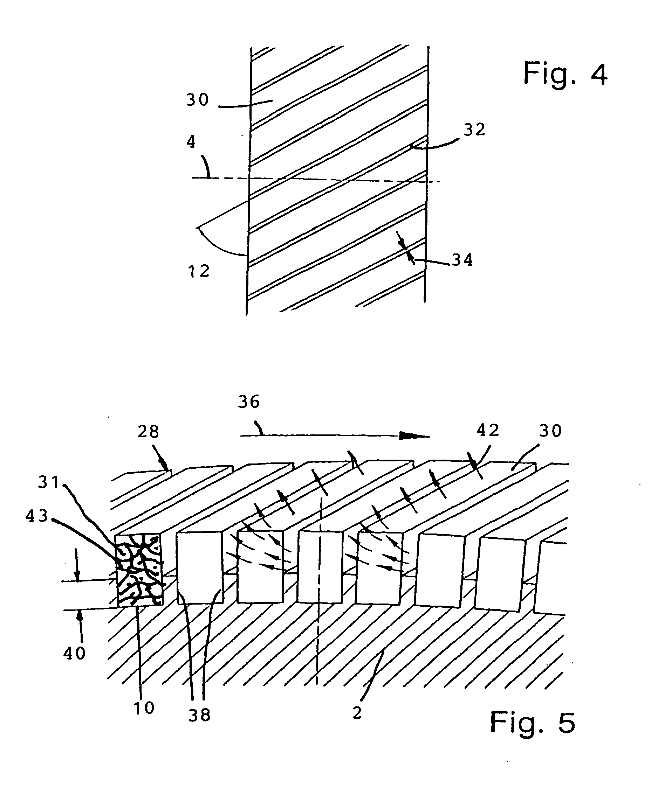

Fig. 4 zeigt vergrößert und schematisch eine Ansicht der Schleifscheibe und/oder Schleifschnecke in Blickrichtung C gemäß Fig. 2, wobei der Einfachheit halber die Lamellen 30 ohne die bereits erläuterten Zähne und einteilig durchgehend dargestellt sind. Die einzelnen als Plättchen ausgebildeten Lamellen 30 am Umfang des Tragkörpers 2 in einem vorgegebenen Winkel 12 zur Drehachse 4 der Lamellenschleifscheibe angeordnet und insbesondere aufgeklebt oder aufgelötet. Es handelt sich bevorzugt um einen Diamant- oder CBN-Schleifbelag, und die Lamellen 30 sind teilweise in die am Umfang des Tragkörpers 2 angeordneten Nuten eingeführt und bevorzugt eingeklebt oder aufgelötet. Der Winkel 12 der Schrägstellung der Lamellen bzw. Plättchen 30 ist im Bereich von 3° bis 80° derart vorgegeben, dass in der Schleifkontaktzone immer wenigstens zwei Lamellen, zweckmäßig auch mehr Lamellen, gleichzeitig in Kontakt mit dem zu bearbeitenden Werkstück stehen. Somit ist sicher gestellt, dass die nächste Lamelle im Einsatz steht bzw. den Druck aufgenommen hat, bevor die vorherige Lamelle den Schleifvorgang beendet. Es wird ein nahtloser Übergang von Lamelle zu Lamelle erreicht, und die Schleifkräfte werden kontinuierlich von den Lamellen der Schleifscheibe auf das Werkstück übertragen, wodurch ein Rattern oder Vibrieren vermieden wird. Der Winkel 12 wird insbesondere in Abhängigkeit der in Richtung der Drehachse angemessenen Breite der Schleifscheibe vorgegeben, wobei bei breiten Scheiben der Winkel 12 bis zu 3° reduziert werden kann, während bei dünnen Schleifscheiben ein größerer Winkel und somit steiler stehende Lamellen 30 vorgegeben werden, um den Spalt 32 zwischen den Lamellen zu überbrücken.

Die Lamellen 30 sind in Umfangrichtung jeweils beabstandet zueinander angeordnet und durch die Spalte 32, nachfolgend auch als Luftspalte bezeichnet, von einander getrennt.

Die Spalten 32 besitzen eine vorgegebene Breite 34, welche je nach Einsatz im Bereich von 1/10 mm bis mehreren mm vorgegeben ist. Durch die Spalte 32 wird beim Schleifen eines Werkstücks zugeführte Kühlflüssigkeit bis zur Kontaktzone gepresst, wodurch eine optimierte Kühlung gewährleistet ist. Die Spalte 32 zwischen den Lamellen 30 werden als Transportraum für das Kühlmittel und die Spanabfuhr genutzt, wobei das Kühlmittel durch die Drehbewegung der Schleifscheibe und die Schrägstellung der Lamellen 30 in tangentialer Drehrichtung beschleunigt und verstärkt in die Kontaktzone gedrückt wird.

Fig. 5 zeigt vergrößert das Detail V gemäß Fig. 3, wobei mittels des Pfeiles 36 die Drehrichtung der Schleifscheibe mit dem Tragkörper 2 und den Lamellen 30 angedeutet ist. Der Tragkörper 2 enthält am äußeren Umfangsbereich bzw. in seiner radial außen liegenden Umfangsfläche 6 die Nuten 10, in welche die einzelnen Lamellen 30 teilweise eingesetzt und insbesondere eingepresst sind. Zwischen den einander gegenüber liegenden Seitenwänden 38 der jeweiligen Nuten 10 und den zugewandten Flächen der eingesetzten Bereiche der Lamellen 30 ist in zweckmäßiger Weise kein Spiel vorhanden, und die Seitenwände 38 liegen unmittelbar und/oder direkt an den in die Nut 10 eingreifenden Teilbereichen der jeweiligen Lamelle 30 an. In vorteilhafter Weise ist ein spielfreier Sitz bzw. eine Passung zwischen den Lamellen 30 und den Nuten 10 vorgegeben. In bevorzugter Weise ist zwischen den eingesetzten Teilbereichen der Lamellen 30 und der Nut 10 eine Press- bzw. Klemmverbindung vorgegeben, wobei insbesondere eine definierte Vorspannung zwecks optimierter Befestigung und Arretierung der Lamellen 30 vorgesehen ist. Die derart in zweckmäßiger Weise kraftschlüssig ausgebildete Verbindung gewährleistet eine funktionssichere und dauerhafte Fixierung und Befestigung der Lamellen 30 in den Nuten 10. Zusätzlich oder alternativ kann im Rahmen der Erfindung eine weiter optimierte Befestigung und Fixierung der Lamellen 30 durch Kleben oder Löten vorgesehen sein.

Des Weiteren kann zusätzlich oder alternativ in einer weiteren Ausgestaltung der Erfindung eine formschlüssige Verbindung der Lamellen 30 in den Nuten 10 vorgesehen sein, wobei die Nuten 10 hintergriffig, beispielsweise als Schwalbenschwanz-Nuten, ausgebildet sind und korrespondierend hierzu die in die Nuten 10 eingreifenden Bereiche der Lamellen 30. Ferner sei besonders darauf hingewiesen, dass erfindungsgemäß die Nuten 10 zumindest an einer Seite bzw. im Bereich einer axialen Stirnfläche des Tragkörpers 2, insbesondere an beiden axialen Stirnflächen, offen ausgebildet sind. Somit können die Nuten 10 in einfacher Weise, insbesondere durch Fräsen, in die Umfangsfläche 6 des Tragkörpers 2 eingebracht werden. Die Lamellen 30 besitzen im wesentlichen die gleiche Längserstreckung wie die Nuten 10 und die freien Enden der Lamellen 30 liegen zumindest näherungsweise im Bereich der seitlichen Nutöffnungen. Bei der hier erläuterten Lamellenschleifscheibe und/oder Schleifschnecke in gerader Form befinden sich die genannten Nutöffnungen im Bereich der axialen Stirnflächen des Tragkörpers 2. Hingegen liegen beispielsweise bei einer topfförmigen Lamellenscheibe die Nutöffnungen im Bereich der zur Drehachse bevorzugt koaxialen Mantelflächen, während bei anderen Schleifscheibenformen die Nutöffnungen entsprechend im Bereich von vergleichbaren Außen- und Mantelflächen sich befinden.

Weiterhin ist aufgrund der seitlich offenen Ausbildung der Nuten 10 problemlos der korrekte Sitz der Lamellen 30 in den Nuten 10 bei der Fertigung vorgebbar und/oder überprüfbar und auch während der Benutzungsdauer in einfacher Weise überprüfbar. Die Nuten 10 weisen eine vorgegebene Tiefe 40 auf, welche zweckmäßig im Bereich von 0,3 bis 6 mm vorgegeben ist. Die Nuttiefe 40 ist vorteilhaft im Bereich von 0,4 bis 5 mm und insbesondere von 0,5 bis 4 mm vorgegeben. Wie aus Fig. 5 unmittelbar ersichtlich, stehen die Lamellen 30 um einen vorgegebenen Betrag, insbesondere 1 bis 10 mm, aus dem Tragkörper 2 bzw. den Nuten 10 vor, wobei zwischen den hervorstehenden Teilen der Lamellen 30 die oben bereits erläuterten Spalte 32 vorhanden sind.

Innerhalb der Lamellen 30 sind offene Porenräume 31 vorhanden, welche miteinander in Verbindung stehen und vom Kühlmittel durchströmbar sind und den Transport von Kühlmittel und bevorzugt auch von Spänen ermöglichen. Die Lamellen 30 enthalten in bevorzugter Weise eine offene Porenstruktur derart, dass das Kühlmittel gemäß der Pfeile 42 die Lamellen durchfluten und spülen kann. Die Poren bzw. Porenräume 31 und/oder die hierdurch im Inneren der Lamellen 30 gebildeten schematisch und beispielshaft in einer der Lamellen 30 angedeuteten Kanäle 43 ermöglichen, dass das Kühlmittel und Schleifspäne und/oder Abrieb die Lamellen 30 wieder auf kurzem Weg verlassen können, wodurch in bevorzugter Weise eine Durchspülung und Säuberung der Lamellen erreicht wird. Die in allen Lamellen 30 erfindungsgemäß vorhanden und die Lamellen 30 durchdringenden Kanäle 43 sind statistisch verteilt und/oder nicht geradlinig, sondern unregelmäßig und/oder wellenartig und/oder durch die Geometrie der offenen und miteinander verbundenen Porenräume ausgebildet. Somit wird in überraschend einfacher Weise das Ansammeln und/oder Festsetzen von Abrieb und/oder Schleifspänen innerhalb des Schleifbelags vermieden. Ein Schmutzbelag oder eine Schlammschicht, welche bei bekannten Schleifscheiben die Schleifeigenschaften nachteilig verändern bzw. verschlechtern, werden aufgrund der erfindungsgemäß vorgegebenen Porosität und/oder Kanäle 43 vermieden. Es sei angemerkt, dass bei bekannten Schleifscheiben ein Schmutzbelag oder eine Schlammschicht und infolge dessen bereits nach recht kurzer Schleifdauer die Schleifeigenschaften sich verschlechtern, wenn Schleifspäne oder Abrieb und somit ein Schmutzbelag durch das Spülen mittels des Kühlmittels gegen den Tragkörper oder eine Klebeschicht nicht mehr weiter aus der schleifaktiven Zone zurückgespült werden können, und somit eine sich auf den Lamellen und/oder in den Spalten zwischen benachbarten Lamellen bildende Schlammschicht den Schleifprozeß in nachteiliger Weise beeinflußt. Aufgrund der erfindungsgemäßen Anordnung und Form der Lamellen in Kombination mit deren Porosität 31 und durchgehenden Kanälen 43 können bei der erfindungsgemäßen Schleifscheibe solche Schmutzbeläge oder Schlammschichten praktisch nicht mehr entstehen und eine nachteilige Beeinflussung des Schleifprozesses ist nicht bzw. nur in einem erheblich reduzierten und unter praktischen Gegebenheiten letztendlich zu vernachlässigendem Umfang gegeben.

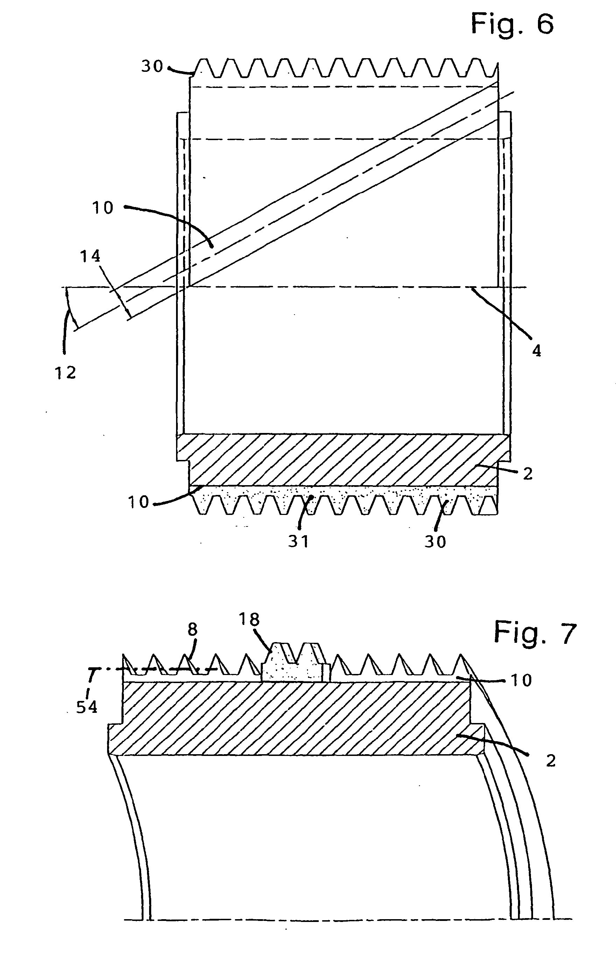

In Fig. 6 ist ein weiteres Ausführungsbeispiel der Schleifschnecke teilweise in einer seitlichen Ansicht und teilweise geschnitten dargestellt, wobei die Nut 10 ebenso wie die hier nicht dargestellten weiteren Nuten in einem Winkel 12 von 30° zur Drehachse 4 geneigt bzw. schräg angeordnet ist. Die Breite 34 der Nut bzw. sämtlicher Nuten 10 ist mit 10 mm vorgegeben. Der Einfachheit halber sind am oberen und unteren Ende die Lamellen 30 ebenso wie die Nuten 10 achsparallel dargestellt, doch sei festgehalten, dass sämtliche Nuten 10 im Winkel 12 schräg zur Drehachse 4 verlaufen und über den Umfang gleichmäßig beabstandet zueinander angeordnet sind.

Fig. 7 zeigt teilweise geschnitten und in perspektivischer Ansicht eine Schleifschnecke ähnlich Fig. 6, wobei in der achsparallel gezeichneten Nut 10 ein Lamellenstück 18 angeordnet ist. Wie bereits erläutert, sind in jeder Nut des Tragkörpers 2 eine Anzahl derartiger Lamellenstücke 18 dicht nebeneinander angeordnet, welche zusammen die sich über die gesamte Länge der jeweiligen Nut erstreckende Lamelle bilden.

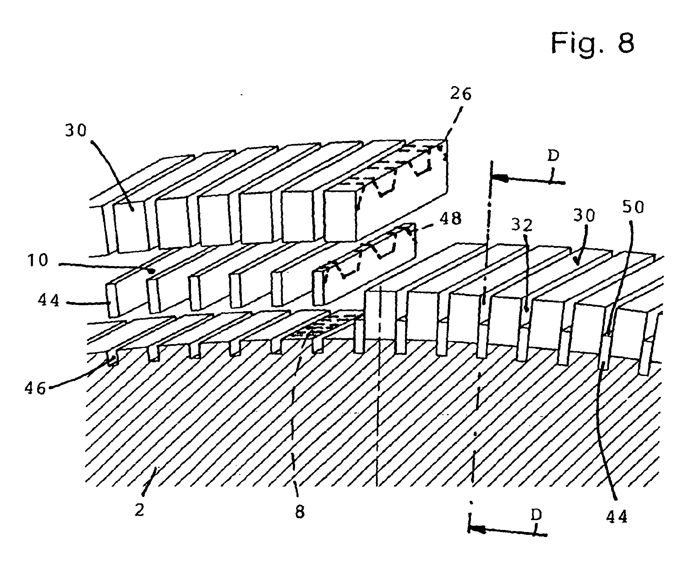

Fig. 8 zeigt ein besonderes Ausführungsbeispiel der als Schleifschnecke ausgebildeten Schleifscheibe, in welcher die Nuten 10 des Tragkörpers 2 zwischen Fixierungsstegen oder Abstandshaltern 44 vorgesehen sind. Der Tragkörper 2 enthält im Umfangsbereich Ausnehmungen 46 zur teilweisen Aufnahme der Fixierungsstege 44, wobei zwischen den vorstehenden Bereichen der Fixierungsstege 44 die genannten Nuten 10 vorhanden sind. Bei Ausbildung des Schleifwerkzeugs als Schleifschnecke enthalten die Lamellen 30 die bereits erläuterten Zähne 26, wie mit gestrichelten Linien angedeutet. Des Weiteren enthalten bei Ausbildung als Schleifschnecke bevorzugt auch die Abstandshalter 44 Zähne 48, welche analog zu dem oben erläuterten Gewindeprofil des Tragkörpers ausgebildet und angeordnet sind und zur Abstützung der Zähne 26 der Lamellen 30 bzw. der Lamellenstücke dienen. Ferner kann im Rahmen der Erfindung auch der Tragkörper 2 zumindest teilweise das erläuterte Gewindeprofil 8 aufweisen, mittels welchem die Zähne 48 der Abstandshalter 44 abgestützt werden.

Im linken Teil der Fig. 8 sind die Abstandshalter bzw. Fixierungsstege 44 sowie die Lamellen 30 vor dem Zusammenbau bzw. der Montage dargestellt, während im rechten Teil das fertig montierte Schleifwerkzeug bzw. die Schleifschnecke dargestellt ist. Mittels der Fixierungsstege 44 sind die Lamellen 30 mittelbar auf dem Tragkörper 2 befestigt. Die Fixierungsstege 44 sind ebenso wie die Lamellen 30 analog zu den vorstehenden Ausführungen auf dem Tragkörper 2 befestigt. Wie aus dem rechten Teil der Fig. 8 ersichtlich, stehen die Lamellen 30 um einen vorgegebenen Betrag teilweise über die freien Oberflächen 50 der jeweiligen Fixierungsstege 26 vor, so dass zwischen den benachbarten Lamellen 30 die oben erläuterten Spalte 32 vorhanden sind.

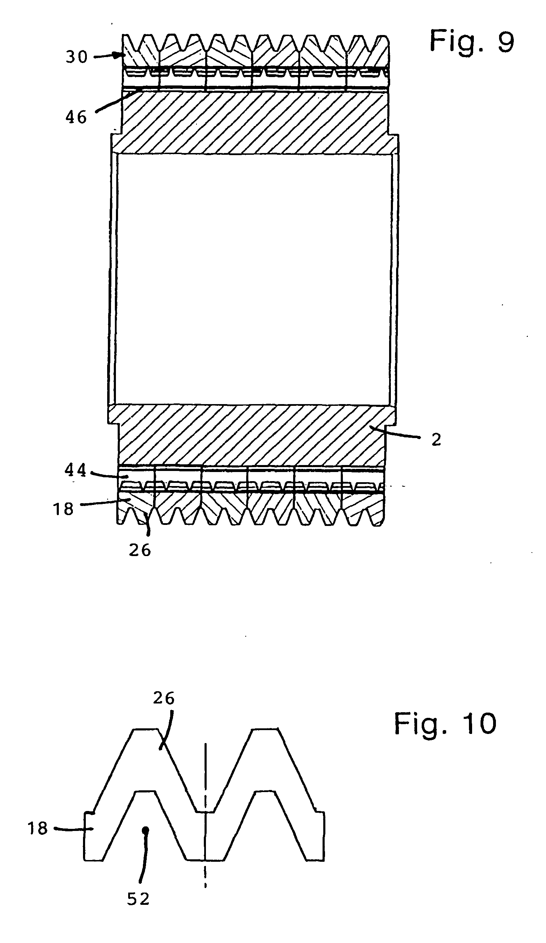

Fig. 9 zeigt einen Schnitt durch eine Schleifschnecke ähnlich gemäß Fig. 8, wie dort mit der Schnittebene D angedeutet. Der Einfachheit halber sind die Lamellen 30, welche aus mehreren Lamellenstücken 18 bestehen, achsparallel dargestellt. Die Lamellenstücke 18 bzw. Lamellen 30 besitzen die Zähne 26 und sind mittels der Abstandshalter 44 in den Ausnehmungen 46 des Tragkörpers 2 mittelbar festgelegt.

Fig. 10 zeigt ein besonderes Ausführungsbeispiel des Lamellenstücks 18 mit zwei Zähnen 26. Die Zähne 26 besitzen profilierte Ausnehmungen 52, welche mit dem Gewindeprofil des zugeordneten Tragkörpers und/oder dessen Fixierungsstegen korrespondieren. Diese Lamellenstücke und entsprechend ausgebildete Lamellen sind vor allem für solche Tragkörper vorgesehen, deren Nuten sich nur teilweise in das Gewindeprofil erstrecken. Insoweit sei auf Fig. 7 verwiesen, in welcher mittels strichpunktierter Linie 54 eine derartige Nut angedeutet ist, deren Nutboden nicht als eine gerade durchgehende Linie ausgebildet ist, sondern durch die Zähne des Gewindeprofils 8 verläuft. Die Ausnehmungen 52 übergreifen bei einer derartigen Ausbildung die gemäß Fig. 7 unterhalb der strichpunktierten Linie 54 befindlichen Teile des Gewindeprofils 8.

### Bezugszeichen

- 2: Tragkörper
- 4: Drehachse
- 6: Umfangsfläche von 2
- 8: Gewindeprofil
- 10: Nut
- 12: Winkel
- 14: Breite von 10
- 16: Zähne von 8
- 18: Lamellenstück
- 20, 22: Abstand
- 24: strichpunktierte Linie
- 26: Zahn von 18 bzw. 30
- 28: Schleifbelag
- 30: Lamelle / Plättchen
- 31: Poren / Porenräume
- 32: Spalt
- 34: Breite von 32
- 36: Pfeil / Drehrichtung
- 38: Seitenwand von 10
- 40: Tiefe von 10
- 42: Pfeil
- 43: Kanal
- 44: Fixierungssteg / Abstandshalter
- 46: Ausnehmung in 2
- 48: Zahn von 44
- 50: freie Oberfläche von 44
- 52: profilierte Ausnehmung
- 54: strichpunktierte Linie

## Patentansprüche

1. Schleifwerkzeug, enthaltend einen Tragkörper (2) und einen im Umfangsbereich angeordneten Schleifbetag (28) mit Lamellen (30), zwischen welchen Spalte (32) vorhanden sind, wobei zum Schleifen Kühlmittel zuführbar ist und wobei der Tragkörper (2) Nuten (10) und Lamellen (30) aufweist, die um einen vorgegebenen Betrag aus dem Tragkörper (2) hervorstehen, und ferner das Schleifwerkzeug als Schleifschnecke ausgebildet ist,
wobei die Lamellen (30) ein Außenprofil mit Zähnen (26) aufweisen, und die Lamellen (30) teilweise in die Nuten (10) eingesetzt sind, welche in der Außenfläche des Tragkörpers (2) angeordnet sind oder zwischen in Ausnehmungen (46) des Tragkörpers (2) teilweise eingesetzten Fixierungsstegen (44) vorgesehen sind, wobei die Lamellen (30) aus den Nuten und Ober die genannte Außenfläche des Tragkörpers (2) oder über die freien Oberflächen (50) der Fixierungsstege (44) teilweise vorstehen, wobei
der Tragkörper (2) oder die Fixierungsstege (44) ein Gewindeprofil und Zähne (16 oder 48) aufweisen, welche mit den Zähnen (26) der Lamellen (30) korrespondieren und diese abstützen, wobei die Zähne (26) der Lamellen (30) radial über die Zähne (16 oder 48) des Tragkörpers (2) oder der Fixierungsstege (44) in einem vorgegebenen Abstand (20, 22) hinausragen,
und wobei die Lamellen (30) eine poröse Struktur derart aufweisen, dass das Kühlmittel durch die Lamellen (30) strömen kann.

2. Schleifwerkzeug nach Anspruch 1, **dadurch gekennzeichnet, dass** die Lamellen (30) eine offene Porenstruktur aufweisen und durch offene oder miteinander in Verbindung stehende Poren oder Porenräume (31) gebildete Kanäle (43) enthalten, welche vom Kühlmittel durchströmbar sind, wobei die Lamellen (30) insbesondere keramisch gebunden ausgebildet sind.

3. Schleifwerkzeug nach Anspruch 1 oder 2, **dadurch gekennzeichnet, dass** zwischen den Lamellen (30) und den Nuten (10), insbesondere deren Seitenwänden (38), eine Klemm- oder Pressverbindung vorgesehen ist und/oder dass die Lamellen (30) kraftschlüssig in den Nuten (10) angeordnet sind und/oder dass die Lamellen (30) mit vorgegebener Vorspannung fixiert sind.

4. Schleifwerkzeug nach einem der Ansprüche 1 bis 3, **dadurch gekennzeichnet, dass** die Lamellen (30) in den Nuten (10) des Tragkörpers (2) formschlüssig fixiert sind und/oder dass die Lamellen (30) mit spielfreiem Sitz oder Passung in die Nuten (10) eingesetzt sind und/oder dass die Lamellen (30) in die Nuten (10) des Tragkörpers (2) geklebt oder gelötet sind.

5. Schleifwerkzeug nach einem der Ansprüche 1 bis 4, **dadurch gekennzeichnet, dass** die Lamellen (30) unter einen vorgegebenen Winkel (12) schräg zur Drehachse (4) angeordnet sind.

6. Schleifwerkzeuge nach einem der Ansprüche 1 bis 5, **dadurch gekennzeichnet, dass** die Lamellen (30) Porenräume (31) oder miteinander in Verbindung stehende Poren und/oder durch diese gebildete Kanäle (43) enthalten, wobei die Porenräume (31) und/oder Kanäle (43) bevorzugt Durchmesser oder Weiten im Bereich von 3 µm bis 3 mm, insbesondere von 5 µm bis 2 mm aufweisen.

7. Schleifwerkzeug nach einem der Ansprüche 1 bis 6, **dadurch gekennzeichnet, dass** die im Tragkörper (2) angeordneten Nuten (10) auf wenigstens einer Seite, bevorzugt auf beiden Seiten, des Tragkörpers (2) offen ausgebildete sind und/oder dass die Lamellen (30) Im wesentlichen die gleiche Längserstreckung wie die Nuten (10) aufweisen und/oder dass die Nuten (10) eine vorgegebene Tiefe (40) aufweisen, bevorzugt im Bereich von 0,3 bis 6 mm, vorteilhaft im Bereich von 0,4 bis 5 mm und insbesondere im Bereich von 0,5 bis 4 mm.

## Claims

1. A grinding tool, containing a support body (2) and an abrasive covering (28), which is situated around the circumference, having lamellae (30), between which gaps (32) are provided, coolant being able to be supplied for the grinding and the support body (2) having grooves (10) and lamellae (30), which protrude by a predetermined amount out of the support body (2), and the grinding tool also being implemented as a grinding worm,
the lamellae (30) having an external profile having teeth (26), and the lamellae (30) partially being inserted in the grooves (10), which are situated in the external surface of the support body (2) or are provided between fixing webs (44), which are partially inserted in recesses (46) of the support body (2), the lamellae (30) partially protruding out of the grooves and above the cited external surface of the support body (2) or above the free surfaces (50) of the fixing webs (44),
the support bodies (2) or the fixing webs (44) having a thread profile and teeth (16 or 48), which correspond to the teeth (26) of the lamellae (30) and support them, the teeth (26) of the lamellae (30) projecting radially beyond the teeth (16 or 48) of the support body (2) or the fixing webs (44) by a predetermined amount (20, 22),
and the lamellae (30) having a porous structure such that the coolant may flow through the lamellae (30).

2. The grinding tool according to Claim 1, **characterized in that** the lamellae (30) have an open pore structure and contain channels (43), which are formed by open or connected pores or pore chambers (31), and which can have the coolant flow through them, the lamellae (30) particularly being implemented as ceramically bonded.

3. The grinding tool according to Claim 1 or 2, **characterized in that** a clamp or press connection is provided between the lamellae (30) and the grooves (10), in particular their side walls (38), and/or the lamellae (30) are non-positively situated in the grooves (10), and/or the lamellae (30) are fixed using a predetermined pre-tension.

4. The grinding tool according to one of Claims 1 through 3, **characterized in that** the lamellae (30) are positively fixed in the grooves (10) of the support body (2), and/or the lamellae (30) are inserted with a seat or fitting without play in the grooves (10), and/or the lamellae (30) are glued or soldered in the grooves (10) of the support body (2).

5. The grinding tool according to one of Claims 1 through 4, **characterized in that** the lamellae (30) are situated diagonally to the rotational axis (4) at a predetermined angle (12).

6. The grinding tool according to one of Claims 1 through 5, **characterized in that** the lamellae (30) contain pore chambers (31) or interconnected pores and/or channels (30) formed thereby, the pore chambers (31) and/or channels (43) preferably having diameters or widths in the range from 3 µm to 3 mm, in particular 5 µm to 2 mm.

7. The grinding tool according to one of Claims 1 through 6, **characterized in that** the grooves (10) situated in the support body (2) are implemented as open on at least one side, preferably on both sides of the support body (2), and/or the lamellae (30) have essentially the same longitudinal extension as the grooves (10), and/or the grooves (10) have a predetermined depth (40), preferably in the range from 0.3 to 6 mm, advantageously in the range from 0.4 to 5 mm, and particularly in the range from 0.5 to 4 mm.

## Revendications

1. Outil de rectification, contenant un corps support (2) et un revêtement de rectification (28) disposé dans la zone périphérique avec des lamelles (30), entre lesquelles sont présentes des fentes (32), du réfrigérant pouvant être amené pour la rectification et le corps support (2) présentant des rainures (10) et des lamelles (30), qui dépassent d'une valeur prédéfinie du corps support (2) et l'outil de rectification étant conçu également comme vis sans fin de rectification, les lamelles (30) présentant un profil extérieur avec des dents (26), et les lamelles (30) étant insérées en partie dans les rainures (10), lesquelles sont disposées dans la surface extérieure du corps support (2) ou étant prévues entre des barrettes de fixation (44) partiellement insérées dans des évidements (46) du corps support (2), les lamelles (30) dépassant partiellement des rainures et de ladite surface extérieure du corps support (2) ou des surfaces (50) libres des barrettes de guidage (44), le corps support (2) ou les barrettes de fixation (44) présentant un profil fileté et des dents (16 ou 48), lesquelles correspondent aux dents (26) des lamelles (30) et soutiennent celles-ci, les dents (26) des lamelles (30) dépassant radialement des dents (16 ou 48) du corps support (2) ou des barrettes de fixation (44) à une distance (20, 22) prédéfinie, et les lamelles (30) présentant une structure poreuse de telle sorte que le réfrigérant peut s'écouler à travers les lamelles (30).

2. Outil de rectification selon la revendication 1, **caractérisé en ce que** les lamelles (30) présentent une structure poreuse ouverte et contiennent des canaux (43) formés par des pores ou espaces poreux (31) ouverts ou en liaison les uns avec les autres, lesquels canaux peuvent être traversés par du réfrigérant, les lamelles (30) étant conçues en particulier à liaison céramique.

3. Outil de rectification selon la revendication 1 ou 2, **caractérisé en ce qu'**une liaison par serrage ou par compression est prévue entre les lamelles (30) et les rainures (10), en particulier leurs parois latérales (38), et/ou **en ce que** les lamelles (30) sont disposées par adhérence dans les rainures (10) et/ou **en ce que** les lamelles (30) sont fixées avec une pré-tension prédéfinie.

4. Outil de rectification selon l'une quelconque des revendications 1 à 3, **caractérisé en ce que** les lamelles (30) sont fixées par complémentarité de forme dans les rainures (10) du corps support (2) et/ou **en ce que** les lamelles (30) sont insérées avec un siège sans jeu ou un ajustement dans les rainures (10) et/ou en ce que les lamelles (30) sont collées ou soudées dans les rainures (10) du corps support (2).

5. Outil de rectification selon l'une quelconque des revendications 1 à 4, **caractérisé en ce que** les lamelles (30) sont disposées sous un angle (12) prédéfini en biais par rapport à l'axe de rotation (4) .

6. Outil de rectification selon l'une quelconque des revendications 1 à 5, **caractérisé en ce que** les lamelles (30) contiennent des espaces poreux (31) ou des pores en liaison les uns avec les autres et/ou des canaux (43) formés par ceux-ci, les espaces poreux (31) et/ou les canaux (43) présentant de préférence des diamètres ou des largeurs dans la plage de 3 µm à 3 mm, en particulier 5 µm à 2 mm.

7. Outil de rectification selon l'une quelconque des revendications 1 à 6, **caractérisé en ce que** les rainures (10) disposées dans le corps support (2) sont conçues ouvertes sur au moins un côté, de préférence sur les deux côtés, du corps support (2) et/ou **en ce que** les lamelles (30) présentent sensiblement la même extension longitudinale que les rainures (10) et/ou **en ce que** les rainures (10) présentent une profondeur (40) prédéfinie, de préférence dans la plage de 0,3 à 6 mm, de façon avantageuse dans la plage de 0,4 à 5 mm et en particulier dans la zone de 0,5 à 4 mm.
